# EUROPEAN PATENT APPLICATION

(11) **EP 1 746 286 A1**
(43) Date of publication of application: **24.01.2007**
(21) Application number: 05739331.6
(22) Date of filing: 11.05.2005
(51) Int. Cl.: F03D 11/04, F03D 3/06

(54) **SUPPORT ARM INSTALLATION STRUCTURE FOR VERTICAL AXIS WIND WHEEL, AND VERTICAL AXIS WIND WHEEL**

(30) Priority: 13.05.2004 JP 2004144062
(71) Applicant: Intellectual Property Bank Corp., Tokyo 105-0001 (JP)
(72) Inventor: YOKOI, Tadashi, 2610011 (JP)
(74) Representative: O'Brien, Niall James
(86) International application number: PCT/JP2005/008623
(87) International publication number: WO 2005/111415

(57) **Abstract**

A mounting structure for support arms in a vertical axis wind turbine is provided, which can disperse load and stress acting on joint portions between hubs and support arms of the vertical axis wind turbine or joint portions between blades and the support arms to prevent excessive stress concentration and reduce vibration and fretting corrosion of joint surfaces. For example, the support arm fixing structure for the vertical axis wind turbine comprises the support arms 20 securing the blades 18 of the vertical axis wind turbine to generate a rotational torque by wind and having a streamline cross section, and hubs 80 and 81 placed on the side of a rotary shaft of a rotor in the vertical axis wind turbine for radially arranging support arm fixing parts 86 having the same shape as the outer shape of the support arms 20 and secured by pressing the support arms 20.

## Description

### TECHNICAL FIELD

This invention relates to a vertical axis wind turbine with a structure for mounting revolving parts for the vertical axis wind turbine and a transmission mechanism for transmitting a rotational torque in a vertical axis wind turbine.

### BACKGROUND ART

There has been so far known an electricity producing wind turbine having a structure in which airfoil-shaped vertical blades are formed by extending perpendicularly upward or downward the tip ends of multiple horizontal wings serving as support arms (or struts) for supporting blades of a vertical axis Darius wind turbine and having the horizontal wings superposed on and united as components on the inner peripheral side of the vertical axis with components on the outer peripheral side of the vertical blades, so as to support the blades by the aforesaid horizontal wings integrally assembled with the aforesaid components on the inner peripheral side.

The aforesaid electricity producing wind turbine can assure sufficient uniting strength between the vertical blades and the horizontal wings and eliminate the use of connectors of every kind for connecting the vertical blades with the horizontal wings at the connection portions between the vertical and horizontal wings, which causes increase of air resistance, so as to fulfill wing profile optimized for dramatically decreasing the air resistance, lowering the startup wind velocity and significantly increasing the efficiency of assembling operation, and materialize elaborative and high-strength Darius wind turbine blades irrespective of the assembling work. (For example, Patent Literature 1)
[Patent Literature 1] Japanese Patent Application Publication No. 2003-239847(A1), Pages 1-3 and 7-9 and Figures 3-6

### DISCLOSURE OF INVENTION

### PROBLEMS TO BE SOLVED BY THE INVENTION

Although the wind power generator described in Patent Literature 1 is intended to assure sufficient uniting strength between the vertical blades and the horizontal wings and eliminate the use of connectors of every kind for connecting the vertical blades with the horizontal wings at the connection portions between the vertical and horizontal wings, which causes increase of air resistance, it is difficult to join the bent portions between the vertical blade and the horizontal wing because of the integrated structure of the vertical blade and the horizontal wing, consequently causing disadvantageous stress concentration on the connection portions between the vertical blade and the horizontal wing.

Furthermore, since the vertical blade and the horizontal wing are identical in shape with each other, the horizontal wing should be made the same size as the vertical blade, causing to increase the air resistance loss and the rise in production cost therefor, and as well, causing inconveniences such as deterioration in balance of the wind turbine due to increased mass of the entire rotor, thus disadvantageously resulting in oscillating motion.

Moreover, the integrated structure of the vertical blade and the horizontal wing in the aforesaid electricity producing wind turbine has a disadvantage such that the vertical blade and the horizontal wing cannot be modified.

Besides, when the blades are secured on a rotary shaft in a common vertical axis wind turbine, the blade and support arm need to be secured to the lower surface of the airfoil-shaped blade or the inside of the blade by some kinds of a joint. Also to the side of the rotary shaft, the support arms need to be joined by some kinds of a joint to unite the rotary shaft and support arms.

In consideration of situations of the conventional art as noted above, the present invention seeks to provide a mounting structure for support arms in a vertical axis wind turbine and the vertical axis wind turbine, which can disperse load and stress, make the connection hard to loose, prevent excessive stress concentration and reduce vibration and fretting corrosion of joint surfaces. Further, the present invention seeks to provide a mounting structure for support arms in a vertical axis wind turbine and the vertical axis wind turbine, which have component parts assembled in a module form, so that they can be assembled and handled with ease on site, reduced in cost and modified on a module by module basis.

### MEANS OF SOLVING THE PROBLEMS

To solve the problems as described above according to the present invention, there is provided a mounting structure for support arms in a vertical axis wind turbine, which comprises the support arms for securing blades of the vertical axis wind turbine to generate a rotational torque by wind and having a streamline cross section, and hubs placed on the side of a rotary shaft of a rotor in the vertical axis wind turbine for radially arranging support arm fixing parts having the same shape as the outer shape of the aforementioned support arms and secured by pressing the aforementioned support arms.

Further, the mounting structure for the support arms in the vertical axis wind turbine according to the present invention comprises the support arms for securing blades of the vertical axis wind turbine to generate a rotational torque by wind and having a streamline cross section, hubs placed on the side of a rotary shaft of a rotor in the vertical axis wind turbine for radially arranging support arm fixing parts having the same shape as the outer shape of the aforementioned support arms and secured by pressing the aforementioned support arms, and clampers provided with the support arm fixing parts having the same shape as the outer shape of the aforementioned support arms and secured by pressing the aforementioned support arm between the aforementioned hubs.

Further, the mounting structure for the support arms in the vertical axis wind turbine according to the present invention is featured by holding blades for the vertical axis wind turbine to generate a rotational torque by wind and radially arranging support arms each having a streamline cross section and having positioning and fixing holes for inserting thereinto positioning members formed of stud bolts, rivets, or pins and support arm fixing parts having the same shape as the outer shape of the aforementioned support arms, and disposing hubs placed on the side of a rotary shaft of a rotor in the vertical axis wind turbine and having positioning and fixing holes for inserting thereinto positioning members formed of stud bolts, rivets, or pins to be secured by pressing the aforementioned support arms, and positioning members formed of stud bolts, rivets, or pins to be inserted into the positioning and fixing holes of the aforementioned support arms and the positioning and fixing holes of the aforementioned hubs.

Further, the mounting structure for the support arms in the vertical axis wind turbine according to the present invention is featured by holding blades for the vertical axis wind turbine to generate a rotational torque by wind and radially arranging support arms each having a streamline cross section and having positioning and fixing holes for inserting thereinto positioning members formed of stud bolts, rivets, or pins and support arm fixing parts having the same shape as the outer shape of the aforementioned support arms, and disposing hubs placed on the side of a rotary shaft of a rotor in the vertical axis wind turbine and having positioning and fixing holes for inserting thereinto positioning members formed of stud bolts, rivets, or pins to be secured by pressing the aforementioned support arms, the support arm fixing parts having the same shape as the outer shape of the aforementioned support arms, clampers having positioning and fixing holes for inserting thereinto the support art fixing parts having the same shape as the outer shape of the aforementioned support arms and positioning members formed of stud bolts, rivets, or pins to be secured by pressing the aforementioned support arms between the aforementioned hubs, and positioning members formed of stud bolts, rivets, or pins to be inserted into the positioning and fixing holes of the aforementioned support arms and the positioning and fixing holes of the aforementioned hubs.

Further, the mounting structure for the support arms in the vertical axis wind turbine according to the present invention is featured in that contact portions for restricting deformation in the perpendicular direction when pressing the aforementioned support arms are formed on the aforementioned hubs.

Further, the mounting structure for the support arms in the vertical axis wind turbine according to the present invention is featured in that contact portions for restricting deformation in the perpendicular direction when pressing the aforementioned support arms are formed on the aforementioned clampers.

Further, the mounting structure for the support arms in the vertical axis wind turbine according to the present invention is featured by comprising blades each having a cutting plane of a hollow cross section and composed by connecting plural blade elements to generate a rotational torque by wind, support arms having a streamline cross section and holding the aforementioned blades at the connection portion of the aforementioned blade elements, and a blade side clampers having support arm fixing parts having the same shape as the outer shape of the aforementioned support arms to be secured by pressing the aforementioned support arms and having blade fixing parts for securing the aforementioned blades.

Further, the mounting structure for the support arms in the vertical axis wind turbine according to the present invention is featured by comprising blades each having a cutting plane of a hollow cross section and composed by connecting plural blade elements to generate a rotational torque by wind, support arms each having a streamline cross section and having positioning and fixing holes for inserting thereinto positioning members formed of stud bolts, rivets, or pins and support arm fixing parts having the same shape as the outer shape of the aforementioned support arms, a blade side clampers having support arm fixing parts having the same shape as the outer shape of the aforementioned support arms to be secured by pressing the aforementioned support arms and having fixing holes for inserting thereinto positioning members formed of stud bolts, rivets, or pins and blade fixing parts for securing the aforementioned blades in the vertical axis wind turbine, and positioning members formed of stud bolts, rivets, or pins to be inserted into the positioning and fixing holes of the aforementioned support arms and the positioning and fixing holes of the aforementioned hubs.

Further, the mounting structure for the support arms in the vertical axis wind turbine according to the present invention is featured in that contact portions for restricting deformation in the perpendicular direction when pressing the aforementioned support arms are formed on the aforementioned blade side clampers.

Further, the mounting structure for the support arms in the vertical axis wind turbine according to the present invention is featured by comprising blades each having a cutting plane of a hollow cross section and composed by connecting plural blade elements to generate a rotational torque by wind, support arms each having a streamline cross section, provided with blade side clampers for securing the aforementioned blade and having the rear edge portion of the cross section within the mounting area cut off by a prescribed length (for instance, not less than 1%) in blade chord, blade side clampers mounted on the aforementioned support arms and having the large parts of the cross sections of support arm fitting holes formed in the same airfoil shape as the outer shape of the aforementioned support arm with fitting dimensions in the blade thickness subjected to boring processing in the manner of loose fitting or transition fitting, blade joint portions joined to the aforementioned blade walls integral with the aforementioned blade side clampers, fixing members formed of stud bolts or rivets for securing the aforementioned blades while pressing the support arm in the blade thickness direction from the outer surface of the aforementioned blade side clampers loaded with the aforementioned support arm, and clamping/antiskid screws embedded in airfoil-shaped front edge portions of the support arms loosely fitted to the aforementioned support arms and the fitting portions of the aforementioned blade side clampers from the end face in the longitudinal direction.

Further, the mounting structure for the support arms in the vertical axis wind turbine according to the present invention is featured in that two plane surfaces are formed on the upper and lower surfaces having the same shape as the outer shape of the support arms and the shape of the fitting holes at the fitting portions between the aforementioned support arms and the aforementioned blade clampers and made thicker on either the front edge side or the rear edge side and thinner on the other, and the clamping/antiskid screws are embedded in the thicker side parts of the aforementioned fitting portions from the end face in the longitudinal direction.

To solve the problems as described above according to the present invention, there is provided a vertical axis wind turbine provided with the aforementioned mounting structure for support arms for the vertical axis wind turbine.

### EFFECT OF THE INVENTION

Since the mounting structure according to the invention comprises the support arms each having a streamline cross section, and the hubs having support arm fixing parts of the same shape as the outer shape of the support arms and secured by pressing the support arms, the structure for securing the support arms by pressing around the support arms at the support arm fixing parts can be fulfilled so as to disperse load and stress, make the connection hard to loose, prevent excessive stress concentration, prevent excessive stress concentration and markedly reduce risks such as fatigue breaking, crush of the joint surface, fretting corrosion of joint surfaces and vibration due to slackness of the support arm.

Further, since the mounting structure according to the invention comprises the support arms each having a streamline cross section, the hubs placed on the side of the rotary shaft of the rotor in the vertical axis wind turbine and secured by pressing the support arms radially arranged with support arm fixing parts having the same shape as the outer shape of the support arms, and the clampers secured between the hubs by disposing the support arm fixing parts having the same shape as the outer shape of the support arms and pressing the support arms between the hubs, the structure for securing the support arms by pressing around the entire surfaces of the support arms at the support arm fixing parts can be fulfilled so as to disperse load and stress, make the connection hard to loose, prevent excessive stress concentration, prevent excessive stress concentration and markedly reduce risks such as fatigue breaking, crush of the joint surface, fretting corrosion of joint surfaces and vibration due to slackness of the support arm.

Further, since the support arms are secured by inserting the inserting the positioning members formed of stud bolts, rivets, or pins, the support arms can be steadily secured while being prevented from falling off and dispersed.

Further, since the mounting structure according to the invention comprises the support arms each having a streamline cross section and the blade side clampers having the support arm fixing parts having the same shape as the outer shape of the support arms to be secured by pressing the support arms and having the blade fixing parts for securing the blades, the structure for securing the support arms by pressing around the support arms at the support arm fixing parts on the blade side can be fulfilled so as to disperse load and stress, make the connection hard to loose, prevent excessive stress concentration, prevent excessive stress concentration and markedly reduce risks such as fatigue breaking, crush of the joint surface, fretting corrosion of joint surfaces and vibration due to slackness of the support arm.

Further, since the mounting structure according to the invention comprises the support arms each having a streamline cross section and the positioning and fixing holes for inserting thereinto the positioning members formed of stud bolts, rivets, or pins, the blade side clampers having the support arm fixing parts having the same shape as the outer shape of the support arms to be secured by pressing the support arms and having the blade fixing parts for securing the blades in the vertical axis wind turbine, and the positioning members formed of stud bolts, rivets, or pins to be inserted into the positioning and fixing holes of the support arms and the positioning and fixing holes of the hubs, the support arms can be steadily secured while being prevented from falling off and dispersed.

Further, since the mounting structure of the vertical axis wind turbine according to the invention has the contact portions formed on the hubs, clampers or blade side clampers to restrict deformation in the perpendicular direction when pressing the support arms, the support arms can be prevented from being deformed or crushed in the perpendicular direction when assembling the support arms.

Further, since the structures of the support arm and the connection portion in the vertical axis wind turbine are of an assembling structure using the bolts and pins, workability of assembling the vertical axis wind turbine on site can be elevated. Besides, work of repairing and dismantling the wind turbine can easily be performed.

Further, since the mounting structure for the support arms in the vertical axis wind turbine according to the present invention comprises the blades each having the cutting plane of a hollow cross section and composed by connecting the plural blade elements to generate a rotational torque by wind, the support arms each having a streamline cross section, provided with the blade side clampers for securing the aforementioned blade and having the rear edge portion of the cross section within the mounting area cut off by a prescribed length (for instance, not less than 1%) in blade chord, the blade side clampers mounted on the aforementioned support arms and having the large parts of the cross sections of the support arm fitting holes formed in the same airfoil shape as the outer shape of the aforementioned support arm with fitting dimensions in the blade thickness subjected to boring processing in the manner of loose fitting or transition fitting, the blade joint portions joined to the aforementioned blade walls integral with the aforementioned blade side clampers, the fixing members formed of stud bolts or rivets for securing the aforementioned blades while pressing the support arm in the blade thickness direction from the outer surface of the aforementioned blade side clampers loaded with the aforementioned support arm, and the clamping/antiskid screws embedded in the airfoil-shaped front edge portions of the support arms loosely fitted to the aforementioned support arms and the fitting portions of the aforementioned blade side clampers from the end face in the longitudinal direction, number of component parts of the vertical axis wind turbine can be reduced in comparison with the structure clamped by upper and lower clampers. Moreover, fitting in the hole formed in the clamper, through which the support arm is inserted, causes a narrow gap to be formed when assembling in the manner of clearance fitting or transition fitting, consequently to reduce friction resistance effective for preventing the support arm from slipping out and involves a risk of a fretting corrosion due to dynamic vibrational load, thus resulting in widening of the gap. Such being the case, the structure according to the present invention brings about an effect of securely preventing the support arm from slipping out by tightening up the clamping/antiskid screws while pressing the support arm onto the thinner portion side so at to increase the surface pressure.

Further, since the mounting structure according to the present invention has two plane surfaces formed on the upper and lower surfaces having the same shape as the outer shape of the support arms and the shape of the fitting holes at the fitting portions between the aforementioned support arms and the aforementioned blade clampers and made thicker on either the front edge side or the rear edge side and thinner on the other and the clamping/antiskid screws embedded in the thicker side parts of the aforementioned fitting portions from the end face in the longitudinal direction, the fitting portions brought about a functional effect similar to that having an airfoil cross section, thus to widen designing options of the wind turbine.

Further according to the invention, the component parts such as the hubs, clampers and blade side clampers in the vertical axis wind turbine can be standardized even when the blades and support arms having different lengths must be outfitted variously, so that the identical connection parts can cope with various products even when a large variety of vertical axis wind turbines exist. Thus, the number of kinds of parts can be reduced to hold down inventories of the component parts.

### BRIEF DESCRIPTION OF THE DRAWINGS

FIG. 1 is a perspective view showing the exterior appearance of a vertical axis wind turbine.
FIG. 2 is a front cross section showing the hubs attached to the support arms.
FIG. 3 is a plane section taken along line A-A in FIG. 2, showing the hubs attached to the support arms.
FIG. 4 is a front section showing the detail of the hubs attached to the support arms.
FIG. 5 is a plane section taken along line B-B in FIG. 4, showing the hubs attached to the support arms.
FIG. 6 is a side section showing the detail of the hubs attached to the support arms.
FIG. 7 is a side section taken along line C-C of the blade in FIG. 2.
FIG. 8 is a side section taken along line D-D of the blade in FIG. 7.
FIG. 9 is a side section taken along line E-E of the blade in FIG. 8.
FIG. 10 illustrates another embodiment of the support arm fixing part.
FIG. 11 is a section taken along line A-A of the support arm fixing part in FIG. 10.
FIG. 12 illustrates the structure of the blade side clamper.
FIG. 13 illustrates the other embodiment of the fitting portion.

### EXPLANATION OF REFERENCE NUMERALS

- 8: Pole
- 10: Vertical axis wind turbine
- 12: Fitting portion
- 14: Inner race side stationary shaft
- 16: Power generator
- 17: Outer race side rotor
- 18: Blade
- 20: Support arm
- 22: Outer race sleeve
- 24: Torque transmission cap
- 26: Speed-up means
- 28: Coupling
- 29: Electric power line
- 30a, 30b and 30c: Bearings
- 32 and 33: Bearing nuts
- 36: Dust seal
- 80, 81 and 180: Hubs
- 82 and 83: Setscrews
- 84: Clamper
- 85: Clamping/antiskid screw
- 86, 87 and 186: Support arm fixing parts
- 88: Clamper fixing bolt
- 89 and 189: Stud bolt
- 90 and 91: Contact portions
- 92: Central blade
- 93: Aerofoil tip blade
- 94: Blade joint portion
- 95: Flush bolt
- 96, 98 and 120: Blade side clampers
- 96a, 98a: Joint plate parts
- 96b and 98b: Clamper parts
- 100 and 102: Support arm fixing parts
- 104 and 106: Fixing bolts
- 110 and 112: Contact portions
- 121: Blade joint portion
- 122: Support arm fitting hole
- 123: Hold
- 124A and 124B: Flush bolt holes
- 182: Screw slot
- 184: Flank
- 188: Split bolt

### BEST MODE FOR CARRYING OUT THE INVENTION

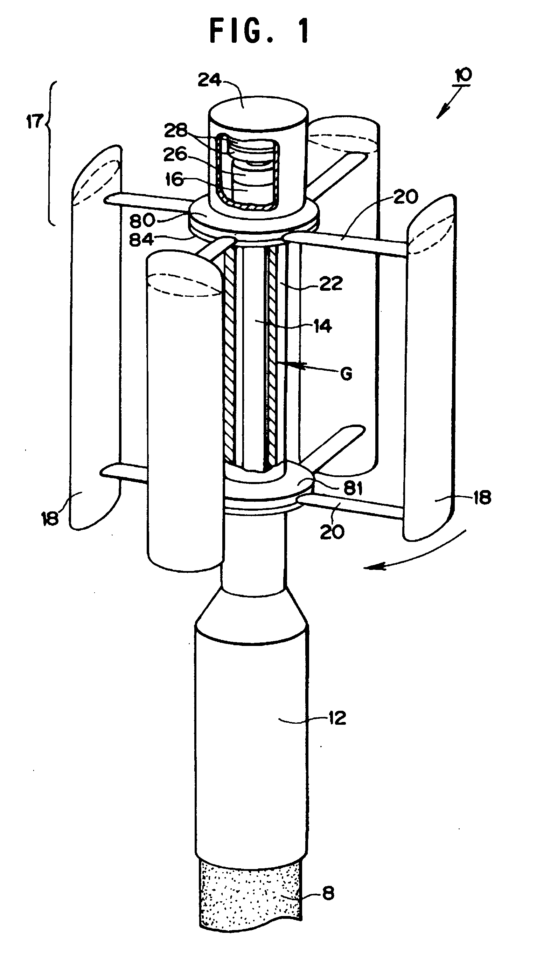

A mounting structure for support arms in a vertical axis wind turbine, and the vertical axis wind turbine according to the present invention will be described hereinafter. FIG. 1 is a perspective view showing the exterior appearance of the vertical axis wind turbine.
As illustrated in FIG. 1, the vertical axis wind turbine 10 comprises a fitting portion 12 attached to an electric pole or other pole 8, a cantilever type inner race side stationary shaft 14 held by the fitting portion 12 to support an outer race side rotor 17 of the vertical axis wind turbine 10 through radial bearings, a power generator 16 mounted on the open end side of the cantilever type inner race side stationary shaft 14, and the outer race side rotor 17 generating a rotational torque by wind.

The outer race side rotor 17 is provided with blades 18 generating a rotational torque by converting the wind into a lifting force, support arms 20 each having a streamline cross section for securing the upper and lower blades 18, upper and lower hubs 80 and 81 placed on the rotary shaft side of the outer race side rotor 17 to secure the support arms 20 by pressing the support arms 20, an outer race sleeve 22 for mounting the hubs 80 and 81, and a torque transmission cap 24 for transmitting the rotational torque from the hubs 80 to the power generator 16. The illustrated embodiment has the four blades 18 disposed on the outer race side rotor 17, but odd numbers, e.g. three or five, of blades 18 may be employed.

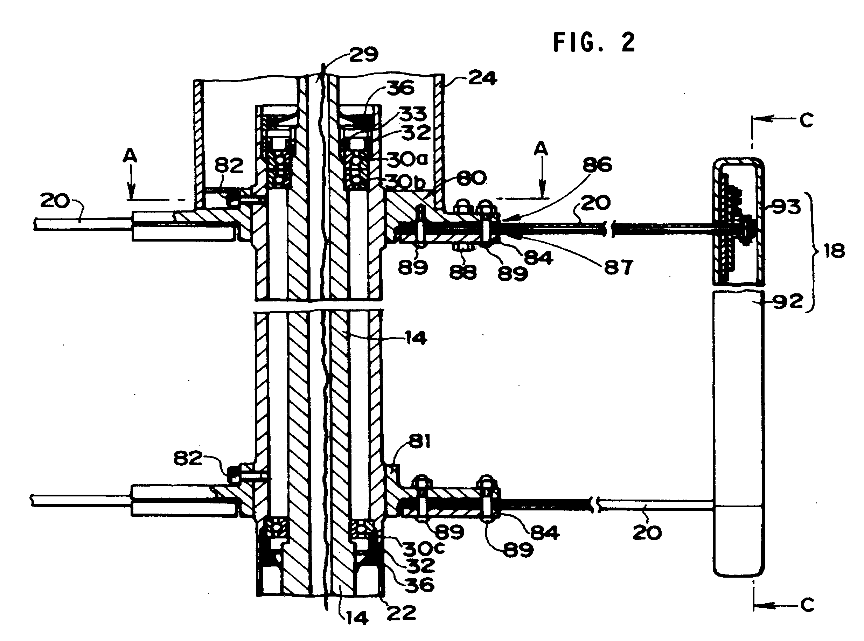

The inner race side stationary shaft 14 is secured on the pole 8 through the fitting portion 12. That is, the inner race side stationary shaft 14 itself does not rotate, so that the inner race side stationary shaft 14 can easily be designed for less flexure by being made large in dimensions to have a large section modulus, thereby to enable the inner race side stationary shaft 14 to be made hollow (FIG. 2). Consequently, an electric power line 29 connected to the power generator 16 and other control lines can be passed through within the inner race side stationary shaft 14.

The power generator in a conventional vertical axis wind turbine has often been disposed beneath the wind turbine rotor so as to transmit the rotational torque from the wind turbine rotor through a gear transmission mechanism. However, in the present invention, the rotor is placed on the outer race side in such a state that the cantilevered inner race side stationary shaft 14 is introduced through to the upper portion of the outer race side rotor 17, so that the power generator 16 mounted on the top of the inner race side stationary shaft 14 and the unit type speed-up means 26 can be moderately arranged. Besides, the torque transmission cap 24 for transmitting the rotational torque serves as a cover for protecting the power generator 16, speed-up means 26 and coupling 28 from rain and wind.

The structure of placing the power generator on the lower side of the bearing necessitates gears for the outer race side rotor and pinion gears for the power generator, and further, needs a cover member and waterproof means for protecting the transmission mechanism. The gear transmission mechanism composed of the aforementioned gears and pinion gears very likely causes degradation in transmitting efficiency and generates noises.

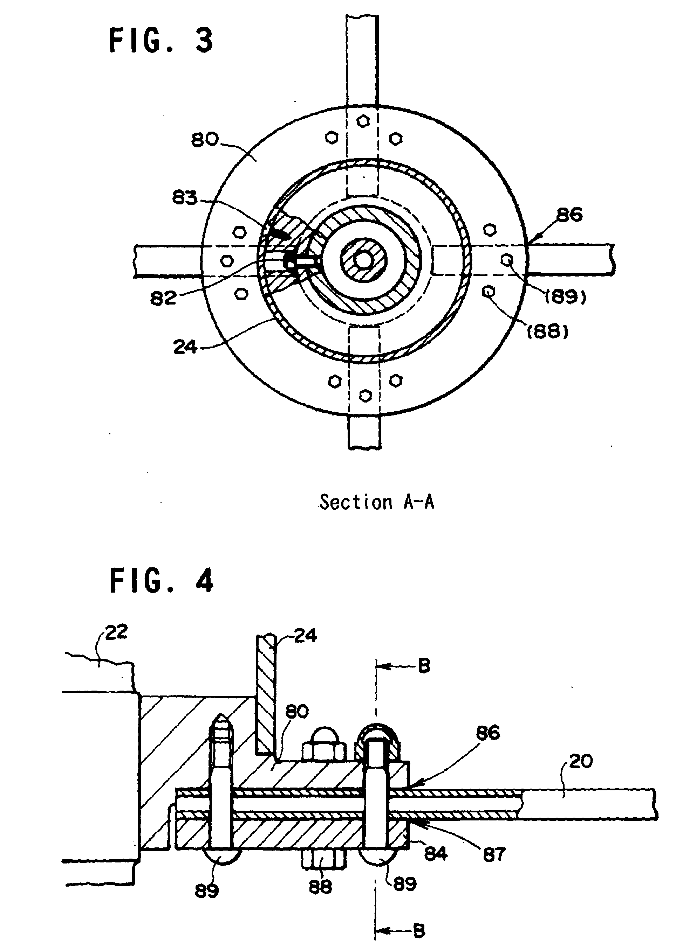

FIG. 2 is the front cross section of the hubs attached to the support arms. FIG. 3 is the plane section taken along line A-A in FIG. 2, showing the hubs attached to the support arms.
FIG. 4 is the front section showing the detail of the hubs attached to the support arms.

As illustrated in FIG. 2, between the inner race side stationary shaft 14 and the outer race sleeve 22, there are disposed bearings 30a, 30b and 30c to rotatably hold the outer race sleeve 22 by the inner race side stationary shaft 14. The outer races of the bearings 30a and 30b are secured to the outer race sleeve 22 by the bearing nuts 32. Similarly, the outer race of the bearing 30a is secured to the outer race sleeve 22 by the bearing nuts 32. The inner races of the bearing 30a and bearing 30b are secured to the inner race side stationary shaft 14 by the bearing 33.

In the illustrated embodiment in FIG. 2, a dust seal 36 is disposed above the bearing 30a and below the bearing 30c to keep out dust and water.

The outer race sleeve 22 assembled to the inner race side stationary shaft 14 in the manner as above revolves around the inner race side stationary shaft 14 while being subjected to the entire weight of the outer race side rotor 10 and the dynamic force and moment produced thereby. The outer race sleeve 22 of the outer race side rotor 17 is arranged to support the radial force acting on the outer race side rotor 17 with the bearings (e.g. bearings 30a, 30b and 30c) at two points astride the center of air pressure (Point G in FIG. 1), consequently to extremely reduce distortions of the outer race sleeve 22 and lessen the possibility of producing thumping vibration due to waggle because of small characteristic frequency thereof.

The embodiment shown in FIG. 2 has an angular bearing capable of enduring both the radial load and thrust load imparted on the bearings 30a and 30b, but the present invention does not impose any limitation to the bearing structure, and therefore, a conical bearing may be used or the radial bearing and thrust bearing may be disposed independently. Also in the embodiment shown in FIG 2, the bearing 30c is a ball bearing capable of enduring radial load, but it is not limited to the ball bearing in the present invention.

As shown in FIG. 2, the hubs 80 and 81 for holding the support arms 20 are attached to the outer sleeve 22. The hubs 80 and 81 are fixed to the outer sleeve 22 with setscrews 82. Also as shown in FIG. 3, the torque transmission cap 24 is fixed to the hub 80 with setscrews 83.

As shown in FIG. 4 and FIG. 2, the support arms 20 are fixedly held between the hub 80 and the clamper 84 or the hub 81 and the clamper 84. The support arm fixing parts 86 as many as the blades 18 or support arms 20, which each have the same shape as the outer shape of the support arm 20, are radially arranged on the hubs 80 and 81. Also on the clampers 84, the support arm fixing parts 87 each having the same shape as the outer shape of the support arm 20 are radially arranged. The clamper 84 may be formed in an annular shape or a sector form divided with respect to each joint portion of the support arm 20.

Each support arm 20 is held between the hub 80 and the clamper 84 or the hub 81 and the clamper 84 and secured by clamping the hubs 80 and 81 by tightening the clamper fixing bolts 88. In the illustrated embodiment, the support arm 20, hubs 80 and 81 and clampers 84 are provided with positioning holes for inserting positioning members such as stud bolts, rivets and pins to determine the relative position of the hub 80 or 81 and the support arm 20 by using the positioning member such as the stud bolt, rivet and pin and prevent the support arm 20 from falling off from the hub 80 or 81.

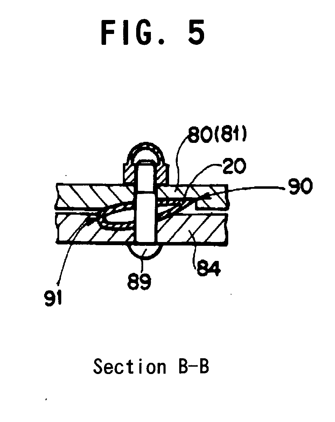

FIG. 5 is the plane section taken along line B-B in FIG. 4, showing the hubs attached to the support arms.
As shown in FIG. 5, the support arm 20 to be mentioned herein has a streamline cross section and a wing-blade formed cross section for producing a lifting force on the ground side of the vertical axis wind turbine. As the support arm 20 produces the lifting force on its ground side, a subsidiary rotational torque is produced as well to prevent fluttering and bouncer of the outer race side rotor 17, which are caused by blowing-up wind.

The support arm fixing parts 86 of the hubs 80 and 81 in fixed connection with the support arm 20 and the support arm fixing parts 87 of the clampers 84 each have the same shape as the outer shape of the support arm 20, so as to act the fastening force of the clamper fixing bolt 88 or stud bolt 89 on the support arms 20 to produce more uniform pressure for pressing the supporting arms 20. The surfaces of the support arm fixing parts 86 and 87 contacting with the support arms 20 serve to transmit the rotational torque acting on the support arms 20 to the hubs 80 and 81.

Further to prevent collapsing deformation of the support arm 20 due to the tightening force of the clamper fixing bolt 88 or the stud bolt 89, contact portions 90 and 91 for restricting deformation in the perpendicular direction (stretching deformation between the front end and the rear end of the support arm 20) when pressing the support arms are formed on the hubs 80 and 81 and the clamper 84.

The blades 18 and support arms 20 are energized by the wind force from all directions to transmit all the force thus obtained to the hubs 80 and 81 through the support arms 20. For instance, in case of crosswind, a radial force is imparted on the hubs 80 and 81 from the support arms 20 to simultaneously produce a torque for rotating the power generator 16 and a torque for applying the brake (not shown).

Also in a case where the vertical axis wind turbine 10 is installed at a prescribed height above the ground or on a hillside, a thrust force created by blowing-up or blowing-down wind is imparted on the hubs 80 and 81 through the support arms 20. When the blades 18 entirely receive the crosswind, a force bending the blades 18 is created to bend the hubs 80 and 81 in the thrust direction. Further, since the force acting on the blades 18 is not always uniform, repeated loading such as a force twisting strongly the outer race sleeve 22 acts on the hubs 80 and 81 through the support arms 20 from all directions.

The repeated loading causes displacement between the contact surfaces of the hubs and the support arms in the conventional vertical axis wind turbine, resulting in roughness on the contact surfaces due to fretting corrosion or, what is more, wobbling on the contact surfaces.

In the present invention, the support arm fixing parts 86 of the hubs 80 and 81 on which the load is concentrated and the support arm fixing parts 87 of the clampers 84 are provided with parts having the same shape as the outer shape of the support arms 20, so that the support arms 20 can be pressured therearound to be secured on the hubs 80 and 81 while being prevented from being deformation.

The present invention has a high degree of freedom for designing the shape and dimensions of the hubs 80 and 81 so that the outer race side rotor 17 can easily be provided with high stiffness, consequently to reduce the risk of occurrence of vibration. For instance, even when predicting occurrence of resonance during operation of the vertical axis wind turbine, minor design changes of the component parts such as reinforcement of thickness of the outer race sleeve 22 and thicknesses of the hubs 80 and 81 can be carried out with ease.

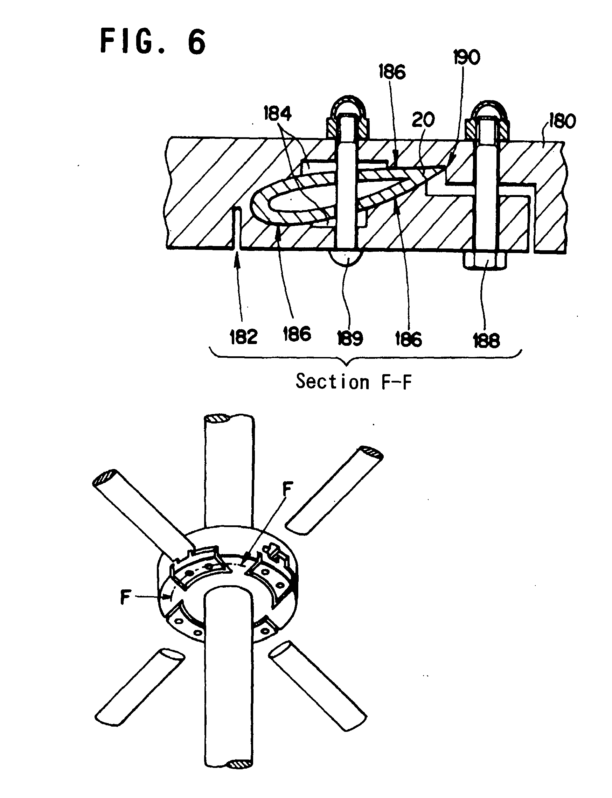

FIG. 6 is the side section showing the detail of the other embodiment of the hubs attached to the support arms.
The hub 180 in the illustrated embodiment has support arm fixing parts 186 radially attached thereto, which have the same shape as the outer shape of the support arm 20. The hub further has positioning and fixing holes for inserting thereinto positioning members formed of stud bolts 189, rivets, or pins, and a split structure in which the support arm 20 is secured by being pressed by tightening split bolts 188 or stud bolts 189. To exert the splitting effect brought about by the split bolts, there may be formed a screw slotting 182 and a runout portion 184. Alternatively, the support arm fixing parts 186 and runout portion 184 may be formed by precision casting or the like.

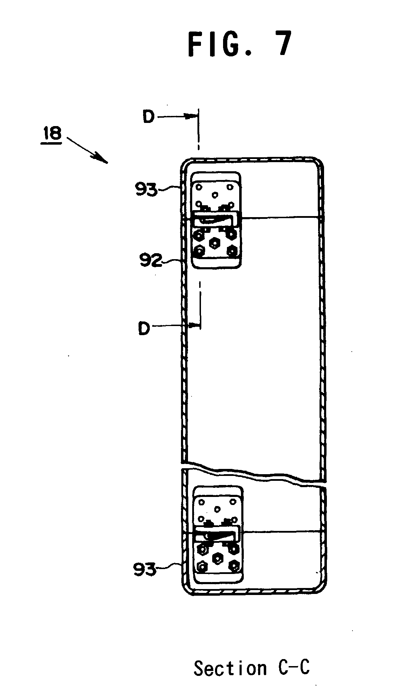

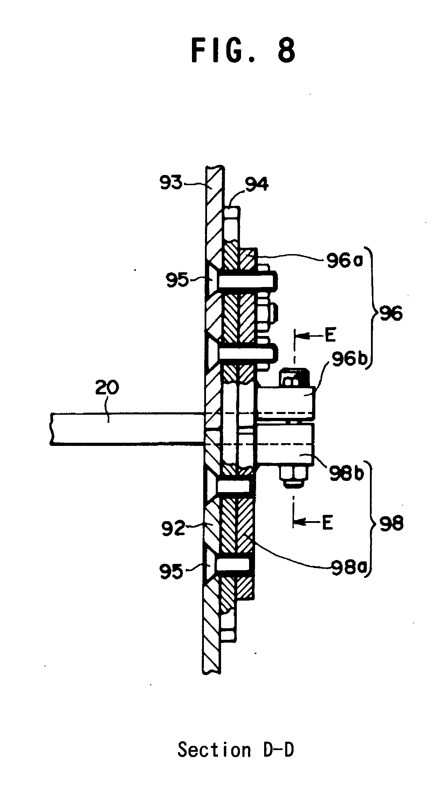

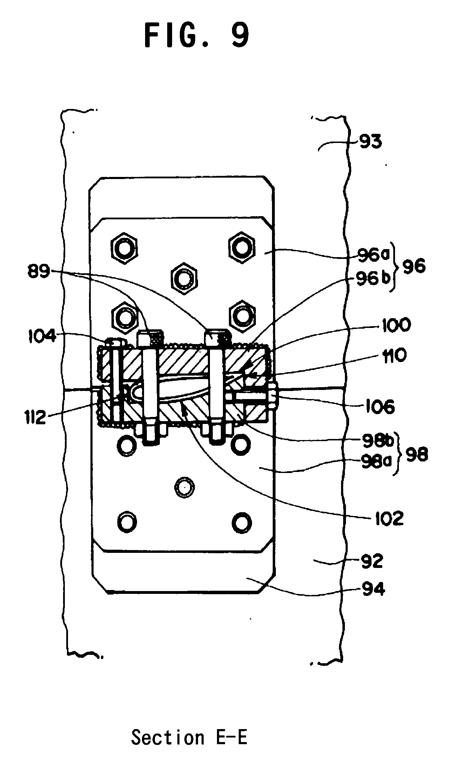

FIG. 7 is the side section taken along line C-C of the blade in FIG. 2, FIG. 8 is the side section taken along line D-D of the blade in FIG. 7, and FIG. 9 is the side section taken along line E-E of the blade in FIG. 8.

As shown in FIG. 2 and FIGS. 7 to 9, the blade 18 is formed of a central blade 92 and an aerofoil tip blade 93. The aerofoil tip blade 93 covers the joint portion between the support arm 20 and the central blade 92 with a function of treating the end surface of the central blade 92 to lessen wing tip vortex caused by the lifting force acting on the central blade 92 so as to rectify air current.

As shown in FIG. 8, the central blade 92, aerofoil tip blade 93, blade joint portion 94 and blade side clampers 96 and 98 are secured by flush bolts 95. The blade side clampers 96 and 98 are provided with support arm fixing parts 100 and 102 having the same shape as the outer shape of the support arms 20. The blade joint portion 94 and blade side clampers 96 and 98 fixedly maintain the central blade 92 and aerofoil tip blade 93 vertically perpendicular to the support arm 20 with the bending load of the respective blades based on the lifting force acting on the central blade 92 and aerofoil tip blade 93.

In the embodiment shown in FIG. 9, the blade side clampers 96 and 98 are formed by welding joint plate parts 96a and 98a for retaining the central blade 92 and aerofoil tip blade 93 and support arm fixing parts 100 and 102 for retaining the support arm 20.

The support arm 20 is held between the blade side clampers 96 and 98 and secured by being pressed by tightening fixing bolts 104 and 106. In the illustrated embodiment, the support arm 20 and blade side clampers 96 and 98 have positioning and fixing holes for passing positioning members such as stud bolts 89, rivets or pins therethrough, so that the blade side clampers 96 and 98 and support arm 20 can be retained in position by the positioning members such as the stud bolts 89, rivets or pins while preventing the support arm 20 from falling off and dispersed from the blade side clampers 96 and 98.

The blade side clampers 96 and 98, which hold the support arm 20 therebetween, should not be in tight contact with each other to be spaced apart therefrom even when holding the support arm 20.

For the mounting portion of the support arm 20 between the blade side clampers 96 and 98, a splitting structure as illustrated in FIG. 6 may be employed.

As shown in FIG. 9, the support arm 20 used in this embodiment has a streamlined cross-sectional shape. The support arm fixing parts 100 and 102 of the blade side clampers 96 and 98 for retaining the support arm 20 in the contact state have the portions each having the same shape as the outer shape of the support arm 20, so as to act the fastening force of the clamper fixing bolts 104 and 106 or stud bolts 89 on the support arms 20 to produce more uniform pressure for pressing the supporting arms 20.

Further to prevent collapsing deformation of the support arm 20 due to the tightening force of the clamper fixing bolts 104 and 106 or the stud bolts 89, contact portions 110 and 112 for restricting deformation in the perpendicular direction (stretching deformation between the front end and the rear end of the support arm 20) when pressing the support arms are formed on the blade side clampers 96 and 98.

The blades 18 repeatedly catch the wind from all directions and all the force thus obtained is transmitted to the hubs 80 and 81 through the support arms 20. The repeated loading causes displacement between the contact surfaces of the hubs and the support arms in the conventional vertical axis wind turbine, resulting in roughness on the contact surfaces due to fretting corrosion or, what is more, wobbling on the contact surfaces.

In the present invention, the support arm fixing parts 100 and 102 are provided with parts having the same shape as the outer shape of the support arms 20, so that the blades 18 can be pressured therearound to be secured on the support arms 20 while being prevented from being deformation.

With the connection structure for the blades 18 and support arms 20 as mentioned above, the wing blades differing in detail can easily be united with each other only by designing the connection portion between the outer surface and the inner surface of the central blade 92 and the aerofoil tip blade 93 in accordance with the basic dimensions of them, thus allowing the blade connection portion to disappear from external view, consequently to constrain increase of air resistance. Besides, integrity in appearance of the component parts can be maintained.

Next, another embodiment of the structure for mounting support arms of the vertical axis wind turbine according to the present invention will be described with reference to the accompanying drawings.

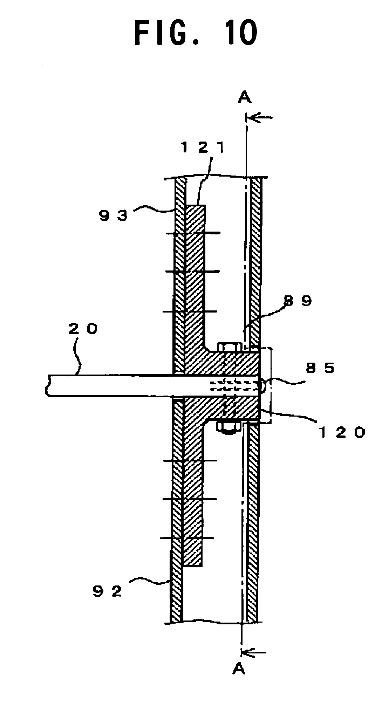

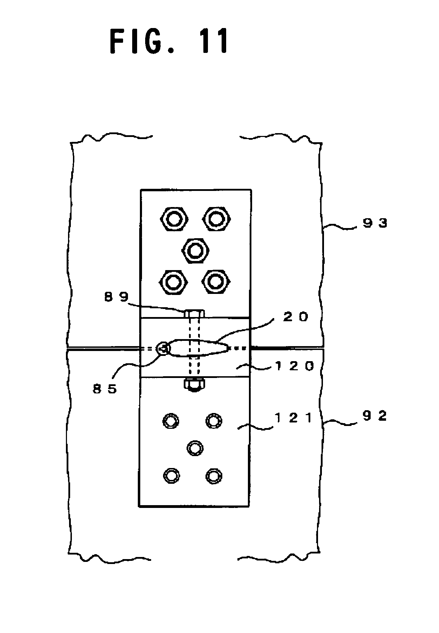

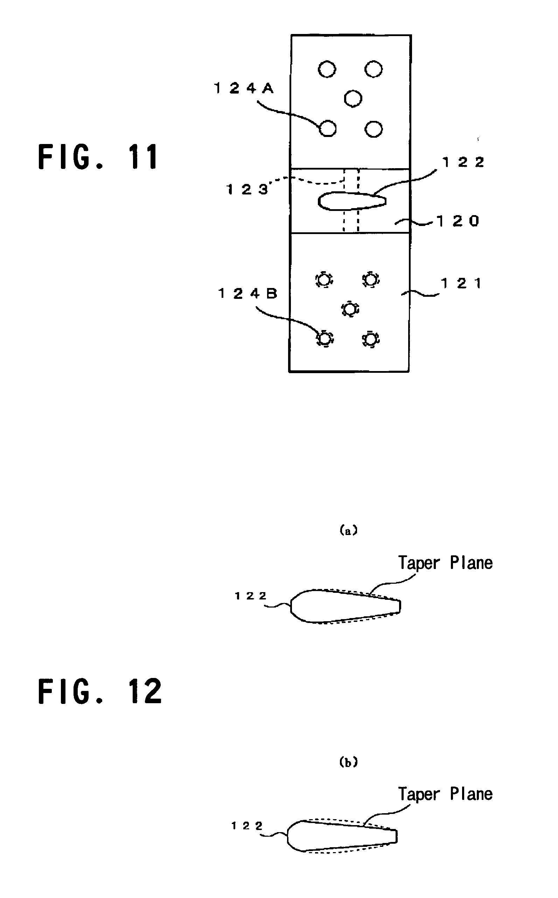

FIG. 10 illustrates the other embodiment of the mounting structure for the support arms in the vertical axis wind turbine according to the present invention. In FIG. 10, screws for securing blade joint portion 121 and blades 18 (92 and 93) are omitted. FIG. 11 is the section taken along line A-A of the support arm fixing part in FIG. 10, and FIG. 12 illustrates the structure of the blade side clamper 120.

As shown in FIG. 10 and FIG. 11, the support arm 20 has a streamline cross section. The blade side clampers 120 for securing the blades 18 (92 and 93) each have the rear edge portion of the cross section within the mounting area cut off by a prescribed length (for instance, not less than 1%) in blade chord,

The blade side clamper 120 has a support arm fitting hole 122 for inserting the end part of the support arm therethrough as shown in FIG. 12. The large part in section of the support arm fitting hole is formed in the same airfoil shape as the outer shape of the support arm with fitting dimensions in the blade thickness subjected to boring processing in the manner of loose fitting or transition fitting.

Further, the blade side clamper 120 is formed integral with a blade joint portion 121. The blade joint portion 121 has a plurality of flush bolt holes 124A and 124B for securing the blade side clamper 120 onto the blade wall surface.

The blade side clamper 120 has a hole 123 for the stud bolt 89 (fixing member) for securing the blade in the state of pressing the support arm 20 in the thickness direction of the blade from the outer surface of the blade side clamper 120 clamping the support arm 120. In place of the fixing member, a rivet or the like may be used.

A clamping/antiskid screw 85 is embedded in the airfoil-shaped front edge portions of the fitting portions of the support arm 20 and the blade side clampers 120 in the state of pressing the support arm 20 toward the rear end side.

In this case, the blade side clampers 120 are integrally formed being not separated up and down, and the fitting portion is formed so as to mount the support arm 20 thereon in the loose fitting or transition fitting state, while the rear end portion of the support arm 20 is cut off a little to make the support arm loose to move in the direction toward the rear end part. Consequently, fitting of the support arm 20 in the fitting portion can be made tight by firmly pressing the support arm onto the rear end part.

A gap formed as alternated in the front end portion is closed by screwing the clamping/antiskid screw 85 in the longitudinal direction from the end surface of the support arm 20 while firmly pressing the support arm onto the rear end part, so that looseness can be eliminated and surface pressure caused by fitting the support arm can be sufficiently increased to steadily hold the support art and blades without danger of causing the blades 18 and the blade side clampers 120 to fall out from the support arm 20 due to centrifugal force caused at a high-speed rotation of the rotor, consequently to enhance the safety of the wind turbine.

FIG. 13 illustrates the other embodiment of the fitting portion, wherein an example of the support arm fitting hole having a small cut is shown in (A) of FIG. 13, and an example of the support arm fitting hole having a large cut is shown in (B) of FIG. 13. As shown in FIG. 13, the fitting portions of the support arm 20 and the blade side clamper 120 have the front edge side part or rear edge side part on the upper surface and lower surface of the support arm fitting hole 122, which is made thicker on either the front edge side or the rear edge side and thinner on the other, and the clamping/antiskid screws are embedded in the thicker side part of the fitting portions from the end face in the longitudinal direction when assembling, so that the fitting portions brought about a functional effect similar to that having an airfoil cross section, thus to widen designing options of the wind turbine.

Meanwhile the aforementioned embodiment has the blades 18 connected by using plural blade elements (central blades 92 and aerofoil tip blades 93), the invention does not impose any limitation to this structure. For instance, the central blades 92 and aerofoil tip blades 93 may be integrally united in one.

### INDUSTRIAL APPLICABILITY

The connection structure for connecting the support arms and hubs according to the present invention makes it possible to mass-produce these component parts using extrusion and therefore lower the cost of production, and further, noticeably eliminate the disadvantages such as crush due to fatigue breaking, looseness and vibration and prevent the component part from falling off owing to stress dispersion, consequently to enable the vertical axis wind turbine to be installed with security at a low cost in a livelihood sphere of human beings.

The connection structure for connecting the blades and support arms according to the present invention makes it possible to mass-produce these component parts using extrusion and therefore lower the cost of production, and further, noticeably eliminate the disadvantages such as crush due to fatigue breaking, looseness and vibration and prevent the component part from falling off owing to stress dispersion, consequently to enable the vertical axis wind turbine to be installed with security at a low cost in a livelihood sphere of human beings.

The connection structure for connecting the support arms and hubs is formed by a module structure according to the present invention makes it possible to enhance the efficiency of mass production for the wind turbine, consequently to reduce the cost of the wind turbine to an affordable price.

The connection structure for connecting the blades and support arms is formed by a module structure according to the present invention makes it possible to enhance the efficiency of mass production for the wind turbine, consequently to reduce the cost of the wind turbine to an affordable price.

## Claims

1. A support arm mounting structure for a vertical axis wind turbine, featured by comprising:
support arms securing blades of the vertical axis wind turbine to generate a rotational torque by wind and having a streamline cross section, and
hubs placed on the side of a rotary shaft of a rotor in the vertical axis wind turbine for radially arranging support arm fixing parts having the same shape as the outer shape of said support arms by pressing said support arms.

2. A support arm mounting structure for a vertical axis wind turbine, featured by comprising:
support arms securing blades of the vertical axis wind turbine to generate a rotational torque by wind and having a streamline cross section,
hubs placed on the side of a rotary shaft of a rotor in the vertical axis wind turbine for radially arranging support arm fixing parts having the same shape as the outer shape of said support arms by pressing said support arms, and
clampers provided with the support arm fixing parts having the same shape as the outer shape of said support arms and secured by pressing said support arms between said hubs.

3. A support arm mounting structure for a vertical axis wind turbine, featured by comprising:
support arms securing blades of the vertical axis wind turbine to generate a rotational torque by wind and having a streamline cross section and fixing holes for inserting thereinto positioning members formed of stud bolts, rivets, or pins,
hubs placed on the side of a rotary shaft of a rotor in the vertical axis wind turbine for radially arranging support arm fixing parts having the same shape as the outer shape of said support arms, having positioning and fixing holes for inserting thereinto positioning members formed of stud bolts, rivets, or pins, and secured by pressing said support arms,
positioning members formed of stud bolts, rivets, or pins to be inserted into the positioning and fixing holes of said support arms and the positioning and fixing holes of said hubs.

4. A support arm mounting structure for a vertical axis wind turbine, featured by comprising:
support arms securing blades of the vertical axis wind turbine to generate a rotational torque by wind and having a streamline cross section and fixing holes for inserting thereinto positioning members formed of stud bolts, rivets, or pins,
hubs placed on the side of a rotary shaft of a rotor in the vertical axis wind turbine for radially arranging support arm fixing parts having the same shape as the outer shape of said support arms, having positioning and fixing holes for inserting thereinto positioning members formed of stud bolts, rivets, or pins, and secured by pressing said support arms,
clampers provided with the support arm fixing part having the same shape as the outer shape of said support arms and the positioning members formed of stud bolts, rivets, or pins and secured by pressing said support arms between said hubs, and
positioning members formed of stud bolts, rivets, or pins to be inserted into the positioning and fixing holes of said support arms, the positioning and fixing holes of said hubs, and the positioning and fixing holes of said clampers.

5. A support arm mounting structure for a vertical axis wind turbine as set forth in any of claims 1 to 4, featured in that contact portions for restricting deformation in the perpendicular direction when pressing said support arms are formed on said hubs.

6. A support arm mounting structure for a vertical axis wind turbine as set forth in claim 2 or claim 4, featured in that contact portions for restricting deformation in the perpendicular direction when pressing said support arms are formed on said clampers.

7. A support arm mounting structure for a vertical axis wind turbine, featured by comprising:
blades each having a cutting plane of a hollow cross section and composed by connecting plural blade elements to generate a rotational torque by wind, support arms having a streamline cross section and holding said blades at the connection portion of said blade elements, and
blade side clampers provided with support arm fixing parts having the same shape as the outer shape of said support arms to be secured by pressing said support arms and having blade fixing parts for securing said blades.

8. A support arm mounting structure for a vertical axis wind turbine, featured by comprising:
blades each having a cutting plane of a hollow cross section and composed by connecting plural blade elements to generate a rotational torque by wind,
support arms each having a streamline cross section and having positioning and fixing holes for inserting thereinto positioning members formed of stud bolts, rivets, or pins and support arm fixing parts having the same shape as the outer shape of said support arms,
a blade side clampers having support arm fixing parts having the same shape as the outer shape of said support arms to be secured by pressing said support arms and having fixing holes for inserting thereinto positioning members formed of stud bolts, rivets, or pins and blade fixing parts for securing said blades in the vertical axis wind turbine, and
positioning members formed of stud bolts, rivets, or pins to be inserted into the positioning and fixing holes of said support arms and the positioning and fixing holes of said blade side clampers.

9. A support arm mounting structure for a vertical axis wind turbine as set forth in claim 7 or claim 8, featured in that contact portions for restricting deformation in the perpendicular direction when pressing said support arms are formed on said blade side clampers.

10. A support arm mounting structure for a vertical axis wind turbine, featured by comprising:
blades each having a cutting plane of a hollow cross section and composed by connecting plural blade elements to generate a rotational torque by wind,
support arms each having a streamline cross section, provided with blade side clampers for securing said blade and having the rear end portion of the cross section within the mounting area cut off by a prescribed length in blade chord,
blade side clampers mounted on said support arms and having the large parts of the cross sections of support arm fitting holes formed in the same airfoil shape as the outer shape of said support arm with fitting dimensions in the blade thickness subjected to boring processing in the manner of loose fitting or transition fitting,
blade joint portions joined to said blade walls integral with said blade side clampers,
fixing members formed of stud bolts or rivets for securing said blades while pressing the support arm in the blade thickness direction from the outer surface of said blade side clampers loaded with said support arm, and
clamping/antiskid screws embedded in airfoil-shaped front end portions of the support arms loosely fitted to said support arms and the fitting portions of said blade side clampers from the end face of said support arms in the longitudinal direction.

11. A support arm mounting structure for a vertical axis wind turbine as set forth in claim 10, featured in that:
two plane surfaces formed on the upper and lower surfaces having the same shape as the outer shape of the support arms and the shape of the fitting holes at the fitting portions between said support arms and said blade clampers and made thicker on either the front end side or the rear end side and thinner on the other, and
said clamping/antiskid screws are embedded in the thicker side parts of said fitting portions from the end face said support arms in the longitudinal direction.

12. A vertical axis wind turbine provided with the support arm mounting structure as set forth in any of claims 1 to 11.
